Europäisches Patentamt

European Patent Office

Office européen des brevets

(19)

(11) **EP 1 316 745 A1**

(12) **EUROPEAN PATENT APPLICATION**
published in accordance with Art. 158(3) EPC

(43) Date of publication:
**04.06.2003 Bulletin 2003/23**

(21) Application number: **01970402.2**

(22) Date of filing: **06.09.2001**

(51) Int Cl.$^7$: **F16H 25/06**

(86) International application number:
**PCT/RU01/00366**

(87) International publication number:
**WO 02/021018 (14.03.2002 Gazette 2002/11)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.09.2000 RU 2000123154**

(71) Applicant: **Panin, Alexandr Andreevich Moscow, 103104 (RU)**

(72) Inventors:
• **PANIN, Alexandr Andreevich Moscow, 103104 (RU)**

• **SHUMILOV, Valerian Petrovich Moscow, 117418 (RU)**
• **LITVYAK, Venyamin Aronovich Moscow, 109444 (RU)**

(74) Representative: **Jehan, Robert et al Williams Powell, Morley House, 26-30 Holborn Viaduct London EC1A 2BP (GB)**

(54) **BALL-BEARING PLANETARY GEAR**

(57)    The inventive ball-bearing planetary gear comprises three coaxial cylindrical ferrules (2,3,4), one of which is fixed. Working slots (5 and 6) and return slots (7,8) are embodied on the internal (4) and external (2) ferrules. Open slots (9) are embodied on the intermediate ferrule (3). The balls (10) are arranged in the open slots and interact with the slots of the ferrules (2 and 4). The first embodiment relates to the relation between the spiral working slots (5) and spiral return slots (7) which are embodied on the internal ferrule (4). The second embodiment relates to a multirow gear. The third embodiment relates to a gear provided with linings (23) in the saddles (24) of which the balls (10) are arranged

**FIG.1**

EP 1 316 745 A1

## Description

TECHNICAL FIELD

This invention relates to mechanical engineering and drilling equipment, in particular, to mechanisms for varying rotational speed between coaxial shafts.

BACKGROUND ART

One prior-art recirculating-ball epicyclic gear train is known to comprise a housing accommodating a drive shaft and a driven shaft supported by thrust bearings, three coaxial cylindrical cages of the outer one is held to the housing, while the intermediate and inner cages are connected to driven shaft and the drive shaft, respectively; the external surface of the inner cage and the inner surface of the outer cage helical tracking grooves are provided, and the intermediate cage has open-end recesses; balls accommodated in said recesses and intended for simultaneous interaction with said helical tracking grooves, and ball escape groove s (SU, A1, 1,525,375).

However, an impact feeding of the balls in slidable engagement with the ball escape groove affects strength characteristics of the gear train imposes restriction on rotational speed thereof.

One more prior-art ball-and-screw epicyclic gear train is known to comprise three coaxial cylindrical cages the outer and the inner of which have helical tracking grooves with effective (working) segments and such tracking grooves having ball return segments oriented oppositely to the direction of the effective segments, while the intermediate cage has open-end recesses, and balls accommodated in said recesses and adapted to interact with the tracking grooves in the other two cages (SU, A1, 1, 810, 691). The gear train discussed above is in fact the closest analogue to all the embodiments of the present invention.

The aforesaid gear train provides for adequately high reliability and speed. However, it is due to the presence of non-monotonically varying acceleration of motion performed by the balls along the ball escape groove bring about the problems concerned with abnormally high wear on the conjugate places in the ball escape groove which imposes limitation upon the high speed of the gear train in question.

There exist some technical solutions aimed at reducing impact loads by specially shaping the ball escape groove (cf. a textbook "Screw mechanisms and drives", Moscow, Mashinostroenie PH, 1982, pp. 130-137 (in Russian). However, the heretofore-known technical solutions fail to completely dispense with non-monotonically varying accelerations through the length of the ball escape groove.

SUMMARY OF THE INVENTION

The present invention has for its primary and essential object to provide a recirculating-ball epicyclic gear train of higher reliability and endurance by completely eliminating any impact loads in the ball escape groove attainable due to shaping said groove along such curves that rule out the onset of acceleration at the instances of engagement and disengagement of the balls, as well at the point of inflection of the ball pathway along the ball escape groove.

The invention appears as a recirculating-ball epicyclic gear train comprising three coaxial cylindrical cages one of which is fixed stationary and the inner and outer cages have working helical grooves and ball escape groove s which are oriented oppositely to the direction of the tracking grooves, while the intermediate cage is provided with open-end recesses, and balls accommodated in said recesses and adapted to interact with the tracking grooves of the other cages.

The inner cage ball escape groove between the conjugate points at its entrance and exit is made along the axial line of the center of balls as two similar mirror-opposed portions of the curves described by the equation of the type $y_{1,2} = ax^n_{1,2}$ in local coordinate systems; one of the curves is associated with the coordinate system $(x_1, y_1)$ disposed on an extension of the helical return groove, and the reference points of the both coordinate systems are spaced apart from the point of mutual intersection of the center lines of the helical tracking groove and the helical ball escape groove at the entrance and exit, respectively, by the value of $L \geq D/Z_r \cos\varphi$ and the same slope of tangent lines is maintained at the conjugate point of the curves; here $x_{1,2}$ - relative local coordinates read from their origins in fractions of the length of segment L, n - an integer exceeding 2 similar for both curves being conjugated, D-diameter of the ball center circumference, $\varphi$ - angle of slope of the helical tracking groove on the inner cage relative to the circumferential direction, $Z_r$ - number of recesses in the intermediate cage.

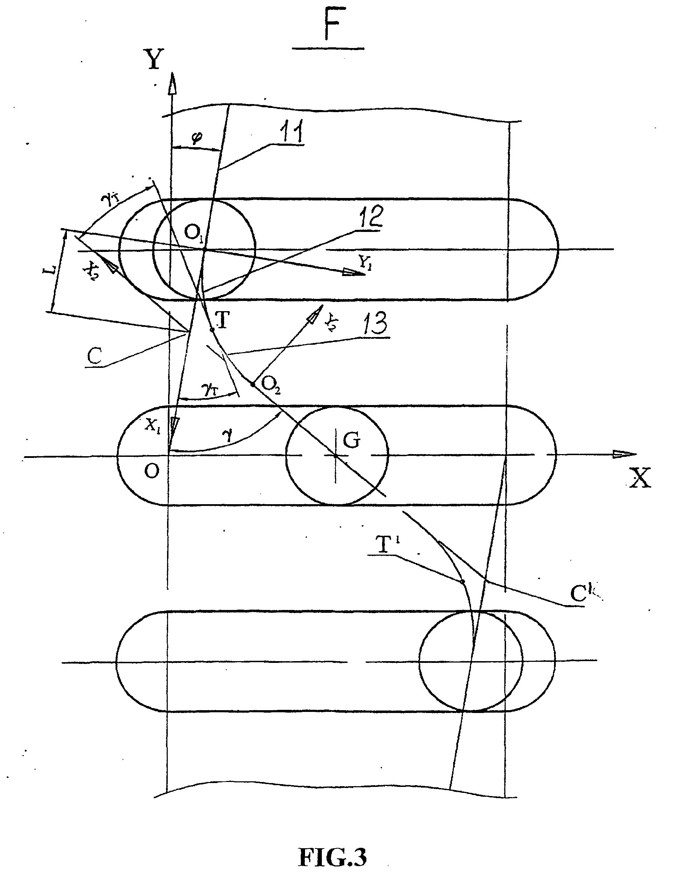

The mathematical expression $y_{1,2} = ax^n_{1,2}$ represents a power function of $y_{1,2} = ax^n$ where a, n are constant magnitudes (cf. "Handbook of elementary mathematics" by M.Ya. Vygodski, "Nauka" PH, 1982, p. 312 (in Russian), subindices 1, 2 $(y_{1,2}, x_{1,2})$ denote various coordinate systems described hereinbefore and shown in FIG.3.

The ball escape groove is provided on a stationary fix cage and has a cross sectional dimension making up at least $(1 + L/dZ_r)$ the width of the tracking groove, where d is a ball diameter.

Known in the present state of the art is the construction of an epicyclic gear unit (cf. the textbook "Sineball reduction units" by R.M. Ignatishchev, Minsk, Vysshaya shkola PH, 1983, p.8 (in Russian), comprising coaxial cylindrical cages, an outer and an inner one, both of which are provided with different-periodicity sinusoidal tracking grooves, the inner cage having said tracks on its peripheral cylindrical surface and the outer cage, on its inside cylindrical surface, said tracks accommodating balls disposed in longitudinal openings (recesses) of the planet (retainer). The aforesaid construction is known as sine-ball reduction unit and is made use of in downhole motors (turbo-drills, electric drills). Said unit is advantageous over the heretofore-known epicyclic gear reducers used for similar purposes (cf. the textbook "Industrial construction of geared turbo-drill motors", Oil and gas industry, Compendium of papers on construction of oil and gas wells, Issue 2-3, VNIIOENG, Moscow, 1992, pp.26-30 (in Russian) in that simple construction arrangement of the sine-ball reduction gear units is combined with considerable kinematic potentialities, namely, a practically attainable range of the gear ratios of a single stage equal to 1.5÷10, whereas with the same diametrical dimensions the gear ratio in one stage of gear reducers in downhole motors is 2÷4, and higher gear ratio values a double-stage gearing is required which badly sophisticates the whole construction. Moreover, in order to attain higher load carrying capacity provision of a multiple-row single-stage sine-ball reduction gearing is more readily obtained as compared with a multiple-row single-stage epicyclic gear train.

However, the aforementioned multiple-row sine-ball epicyclic reduction gear suffers from some disadvantages. One of the major operational disadvantages inherent in sine-ball epicyclic reduction gears resides in the fact that with the balls running along the sinusoidal tracks of the cages the amount of load transmitted by the balls to the openings (recesses) in the planet carrier is a variable magnitude reaching its maximum at the midpoint of the amplitude of axial displacement of a ball along the recess in the planet carrier. The result is uneven wear on the effective (contact) surface of the carrier recesses, the maximum amount of wear occurring in the middle portion thereof. This in turn leads to jamming up likely to occur in case of axial displacement of the balls relative to the recesses and to resultant reducing in efficiency of the mechanism during operation.

Another substantial disadvantage of the sine-ball epicyclic reduction gears associated with its production process techniques resides in relatively stringent requirements imposed on accuracy of milling sinusoidal tracking grooves in milling machines using the method of positive kinematics, numerically controlled machines inclusive. As a rule, use is made of selective assembling which however does not rule out a necessity for using additional construction devices for providing even load distribution among the rows of a multiple-row reduction gear.

And lastly, one more disadvantage of sine-ball epicyclic reduction gears compared with a geared reducer is its relatively low efficiency (0.85 to 0.87%) for gear ratios of 3 to 7.

Some of the abovementioned disadvantages inherent in the sine-ball epicyclic reduction gears are overcome a recirculating-ball epicyclic gear train (SU A1 #1,810,681) comprising three cylindrical cages one of which is stationary fixed, while the inner and outer cages are provided with helical tracking grooves and ball escape groove s oriented oppositely with respect to the tracking grooves, the intermediate cage having open-end recesses accommodating balls adapted to interact with the grooves of the other cages.

As a matter of fact, the technical solution considered hereinabove is in fact a kinematic analog to sine-ball epicyclic reduction gear with the only difference that the closed circular sinusoids along which the tracking grooves are directed, are replaced with a closed circular system of helical tracking grooves, thus providing uniformly transmitting a tangential force to the carrier recesses by the balls when said balls run along the helical tracking grooves.

However, said mechanism suffers from some gross disadvantages which restrict its use or render it impossible in multiple-row heavily loaded gear trains limited as to their diametrical dimensions such as, e.g., reduction gears of downhole drilling machines, said disadvantages being as follows:

1. Axial out-of-balance accounted for by the fact that the balls are loaded by a tangential force only in the unidirectional helical tracking grooves;
2. Sophisticated manufacturing process and erecting of the outer cage;
3. Complicated uniform distribution of loads among the rows of the gear train when used in a heavily loaded multiple-row reduction gear (e.g., such of a downhole drilling machine).

Hence the invention is aimed at solving the problem of higher operating reliability and endurance of the herein-proposed gear train by eliminating thrust loads upon the bearings.

The invention represents a recirculating-ball epicyclic gear train comprising three coaxial cylindrical cages one of which is fixed stationary, while the inner and outer cages installed on the input shaft and in the reduction gear housing, respectively, are provided with helical tracking grooves and ball escape groove s oriented oppositely to the direction of the tracking grooves, while the intermediate cage (planet carrier) interconnected with the reduction gear output shaft has open-end recesses, balls accommodated in the recesses and adapted to interact with the grooves of the other cages, with a view to providing multiple-row gear train of a heavily loaded reduction gear the number of rows whose inner and outer cages have right-hand helical tracking grooves is equal to the number of rows whose inner and outer cages have left-hand helical tracking grooves, and the width of the ball escape groove on the stationary fixed cage is at least 1.09 the width of the tracking groove.

The recirculating-ball epicyclic gear train is enclosed in a housing which accommodates the outer cage kept against rotation and provided with the helical tracking grooves and the ball escape groove s are open-end ones opening to the cage end faces, and the ball escape grooves are arranged parallel to the cage axis.

The outer, cage appears as sections corresponding to said rows and provided with sleeves, each of the cage sections is axially movable in its own sleeve, and each of said sleeves is accommodated in the housing and is kept against rotation therein, the length of the sleeve exceeds that of the cage section.

Springy members are interposed between said sections and/or said sleeves.

Apart from the aforementioned operational problems of the recirculating-ball epicyclic gear trains, including those with helical and sinusoidal tracking grooves, there exists the problem of abnormally high wear of a ball and on the contact surface of a groove due to a complicated interaction of a ball and a tracking groove, since in the course of operation the force from the ball is transmitted to the intermediate cage by virtue of a contact between the ball and the face of the recess with a simultaneous rotation of the ball and its reciprocation along the recess.

The aforementioned disadvantages are also inherent in one more prior-art epicyclic gear train which comprises three coaxial cylindrical cages, one of which is fixed stationary, the inner and the outer cages are provided with helical tracking grooves and ball escape groove s and the intermediate cage has open-end recesses, balls accommodated in the recesses and adapted to interact with the grooves of the other cages (SU, A1, 1,810,681).

Therefore the present invention has for its primary object to provide higher performance characteristics of the herein-proposed recirculating-ball epicyclic gear train by increasing its strength characteristics and extending the service life thereof.

Said object is accomplished due to the provision of a recirculating-ball epicyclic gear train comprising three coaxial cylindrical cages one of which is fixed stationary and the inner and outer cages are provided with helical tracking grooves and ball escape groove s and the intermediate cage has open-end recesses, balls accommodated in the recesses and adapted to interact with the grooves of the other cages, according to the invention, the gear train is further provided with inserts disposed in the recesses of the intermediate cage movably lengthwise said recesses, and the balls are accommodated in the sockets of the inserts.

Part or all of the surface of the insert socket is spherical with the radius of the sphere equal to the ball radius.

The inserts has a plain surface contacting the faces of the recess oriented along the direction of the intermediate cage rotation.

A round hole is provided in the inserts on its side opposite to the plain surface contacting the face of the recess, the axis of said hole passing through the center of the sphere forming said socket, and the radius of said opening is equal to the ball radius.

The insert appears as a solid of revolution.

Said solid of revolution is in fact a cylinder whose diameter corresponds to the width of said recess and axis passes through the center of the sphere defining said socket.

Radial dimension of the insert is not in excess of the thickness of the intermediate cage.

Surfaces bounding the inserts radially are cylinder-shaped.

BRIEF DESCRIPTION OF THE DRAWINGS

The essence of the invention is illustrated in FIGS.1-9 below, wherein:

FIG.1 is a longitudinal-sectional view of the recirculating-ball epicyclic gear train, according to the invention;

FIG. 2 is a registered cylindrical development onto the plane of the outer, intermediate and inner cages with a preselected coordinate system;

FIG.3 is a scaled-up view of the ball escape groove on the inner cage shown with reference to local coordinate systems and conjugation points;

FIG.4 is a longitudinal section view of the recirculating-ball epicyclic gear train (multiple-row version);

FIG.5 is a registered cylindrical development onto the plane of the outer, intermediate and inner cages in two adjacent rows of a multiple-row epicyclic gear train;

FIG.6 is a loading diagram of the gear train members;

FIGS.7-9 represent an embodiment of the epicyclic gear train using inserts.

BEST METHOD OF CARRYING OUT THE INVENTION

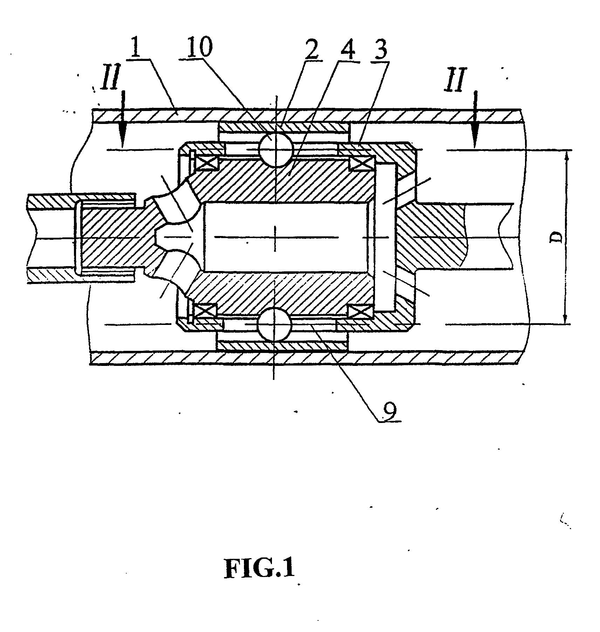

The recirculating-ball epicyclic gear train (FIGS.1-3) comprises three coaxial cylindrical cages 2, 3, 4 enclosed in a housing 1. The outer cage 2 is stationary fixed. The inner cage 4 and the outer cage 2 have respective helical tracking grooves 5 and 6, and ball escape groove s 7 and 8 oriented oppositely to the direction of the tracking grooves 5 and 6. An intermediate cage 3 has open-end recesses 9 accommodating balls 10 adapted to interact with the grooves of the cages 2 and 4.

With a view to accomplishing the object of the invention, the ball escape groove 7 on the inner cage 4 and between the conjugation points $0_1$ and $0_2$ on the entrance and exit areas thereof is arranged along an axis 11 passing through the center of the balls 10 and appears as two similar mirror-opposed portions of curves 12 and 13 which are described by an equation of the type $y_{1,2} = ax^n_{1,2}$ in a local coordinate system; one of said curves is associated with the coordinate system $(x_1, y_1)$ disposed on an extension of the helical tracking groove 5, while the other curve is associated with the coordinate system $(x_2, y_2)$ disposed on an extension of the helical return groove 7 . The reference (conjugate) points $0_1$ and $0_2$ of both coordinate systems are spaced apart from the point C of mutual intersection of the extension of the center lines of the helical tracking groove 5 and of the helical ball escape groove 7 at the entrance and exit, respectively, by the value of $L \geq D/Z_r \cos\varphi$, where $x_{1,2}$ - relative local coordinates read from their origins in fractions of the length of segment L, n - an integer exceeding 2 which is the same for both curves being conjugated, D - diameter of the center circumference of the balls 10, $\varphi$ - angle of slope of the tracking groove 5 on the inner cage 4 relative to the circumferential direction, $Z_r$-number of recesses 9 in the intermediate cage 3 . The same slope of tangent lines to the curves 12, 13 in local coordinates is maintained at the point T of conjugation of said curves. The width of the ball escape groove 8 on the stationary cage 2 is at least $(1 + L/dZ_r)$ the width of the helical tracking groove 6, where d - diameter of the ball 10.

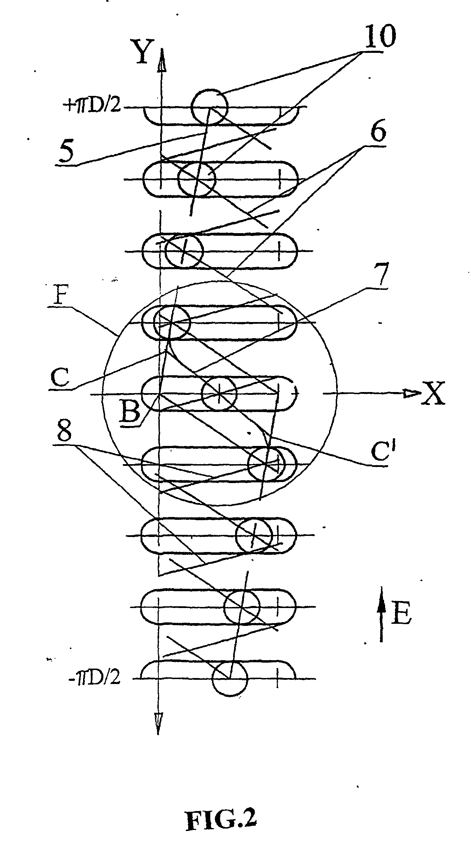

For describing the operation of the herein-proposed recirculating-ball epicyclic gear train there has been selected a principal coordinate system, wherein X-axis coincides with the axis of rotation of said gear train and Y-axis is oriented circumferentially, while adopted as the reference point (O point) is a point of intersection of an extension of line 11 of centers of the balls 10 of the helical tracking groove 5 on the inner cage 4 with X-axis. Insofar as in the registered cylindrical development along the section AA shown in FIG 2, $O_x$-axis divides the perimeter of circle into two equal parts, an extension of the helical tracking groove 5 completing the coil of helix at point B.

With the inner cage 4 rotating, the balls 10 which simultaneously interact with the helical tracking groove 5 on the inner cage 4, as well as with the longitudinal recesses 9 in the intermediate cage 3 and the helical tracking grooves 6 on the outer (fixed) cage 2, start moving along the helical tracking grooves 6. Since the balls 10 are accommodated in the recesses 9 such a motion of the balls 10 is accompanied by a circular movement performed by the intermediate cage 3. In its turn, movement of the balls 10 along the helical tracking groove 5 is limited to their length, with the inner cage 4 rotating in a sense indicated with the arrow E (FIG.2), the balls 10 accommodated in the recesses 9 of the intermediate cage 3, due to their interacting with the helical tracking groove, assume consecutively the leftmost position. In order that the balls 10 resume their motion along the helical tracking grooves 6 the balls should be displaced from the leftmost position to the origin of the next helical tracking groove 6 on the stationary fixed cage 2. To this end provision is made for the ball escape groove 7 and 8 disposed on the inner cage 4 and the outer (fixed) cage 2, respectively.

To effect such a ball displacement the point C where the center of the ball is located on the last portion of the helical tracking groove 5 in the inner cage 4, is connected via the ball return helical groove to the point C' where to the ball 10 situated at the point C should be relocated for said ball to resume its motion along a next helical tracking groove 6.

However, interconnecting the points C and C' via the ball return helical groove results in the onset of an impact at the instance of the ball entrance into and exit from said groove. Such an impact affects adversely the strength characteristics of the gear train in question and results in limitation imposed on rotational speed thereof.

To eliminate impact entrance into and exit from the return groove 7 on the inner cage 4 said groove is mated with the helical tracking groove 5 by means of two similar mirror-opposed curve portions described by the equation $y_{1,2} = ax^n_{1,2}$. Use of two similar mirror-opposed curves is accounted for by the fact that only the aforestated power dependencies enable one to realize an impact-free ball entrance and exit. When designing ball escape groove s in various screw-gears mechanisms and drives (cf. a textbook "Screw-type mechanisms and trains", Moscow, Mashinostroenie PH, 1982, pp.130-137 (in Russian) with a view to prolonging service life of mechanisms, attempts are made to eliminate impact loads. With this object in view, a ball escape groove is so engineered that the ball pathway curvature at the conjugate points be equal to zero and not until that said curvature increases smoothly. As it is known commonly, curvature in a rectangular coordinate system is found from the following expression:

$$C_r = y''/\sqrt{(1+y'^2)^3},$$

where y' and y" are respectively the first and second derivatives of a function used for describing the path of ball motion along the return groove.

As a rule, when shaping a ball escape groove one deals only with the provision of an impact-free ball entrance (x=0), leaving out of consideration the onset of impact load at the point of mating of the entrance portion with the rectilinear groove portions. In all the instances of such a mating when using the aforesaid power dependencies an impact occurs due to the fact that with x>0 the condition $C_r$=0 fails to be satisfied at the mating places.

The difficulties mentioned before may be overcome when the mating portion of the ball escape groove is subdivided into two similar sections.

On account of the symmetry of the ball escape groove 7 with respect to the point G, in what follows formation of the ball movement pathway is considered only on the side of entrance to said groove.

One of said groove sections should be referred to the local coordinate system $(y_1, x_1)$ having the reference point at $O_1$ and the other portion, to the coordinate system $(y_2, x_2)$ with the reference point at $O_2$. The length L of the mating section should be the same for the axes $O_1X_1$ and $O_2X_2$. This means that the value of L should be less than the length of the segment $OO_1$ in order to provide favorable angles of contact between the ball escape groove 7 and the ball 10 at the instance of its accelerated motion along the recess 9. With such local coordinate systems selected, it is the point T that is the conjugate point of the power dependencies used. This in turn means that the equalities $x_{1m}=x_{2m}$ and $y_{1m}=y_{2m}$ are satisfied.

However, in order to attain smoothness and hence equal curvature) of the sections being mated it is also necessary to attain equality of the angles of slope of the tangent lines to the curves at the point T, i.e., that the equality $y'_{1T} = y'_{2T} = t_{g\gamma T}$ be satisfied. In order that said condition should be met, it is required that angle $\gamma_T$ of slope of the tangent line at the point T in the coordinate systems $(x_1, y_1)$ and $(x_2, y_2)$ be equal to half the angle $\gamma$ between the axes $O_1X_1$ and $O_2X_2$.

With the proviso that all geometric parameters of the gear train in question are already known (that is, angle $\varphi$ of slope of the helical tracking groove 5, half the length of the recess 9, i.e., that of the segment OG, length of the mating portion in the coordinates $(O_1X_1)$ or $(O_2X_2)$, all missing characteristics (that is, $x_{1T}$, $y_{1T}$, $y'_T$, $\gamma$ and $\gamma_T$ are calculated using the corresponding mathematical tools.

With a view to facilitating the construction of the recirculating-ball epicyclic gear train disclosed herein, increasing its reliability and speed, the ball escape groove 8 on the stationary fixed cage 2 is wider than the helical tracking groove 6 by at least $(1 + L/dZ_r)$ the width of the helical tracking groove 6 so as to provide free movement of the balls 10 along the ball escape grooves 8 when said balls move at an accelerated speed to the origin of the next helical tracking groove 6 on the outer cage 2. Since the balls 10 are not engaged in transmitting the tangential force, the configuration of ball escape groove s 8 can substantially be simplified, in particular said grooves to their full extent may run along helical lines without the corresponding entrance and exit portions as is the case with the ball escape groove 7 on the inner cage 4. Relative increase in the width of the ball escape groove is the function of the groove length L, ball diameter d and number of recesses $Z_r$ in the intermediate cage 9. \*\*\*For the cylindrical development shown in FIG.2 the relative increase in the width of the escape grooves compared with the tracking grooves is 1.092.

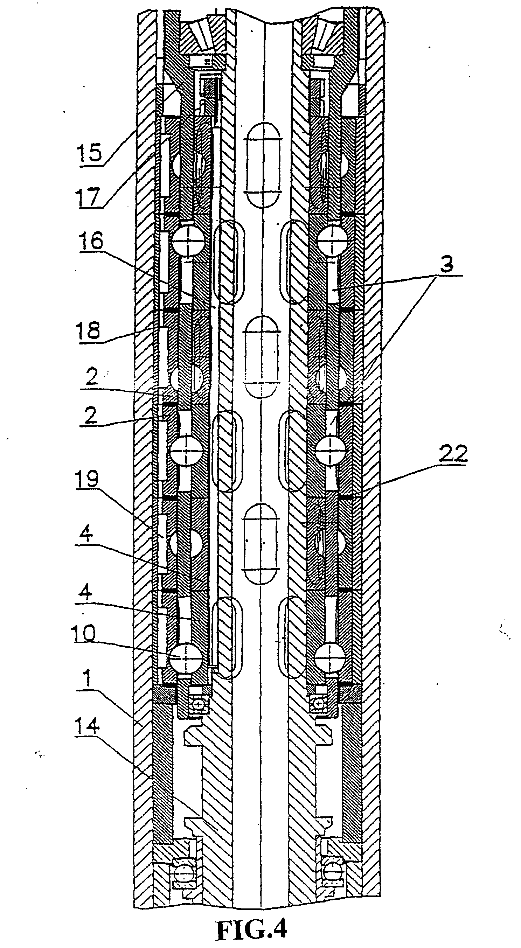

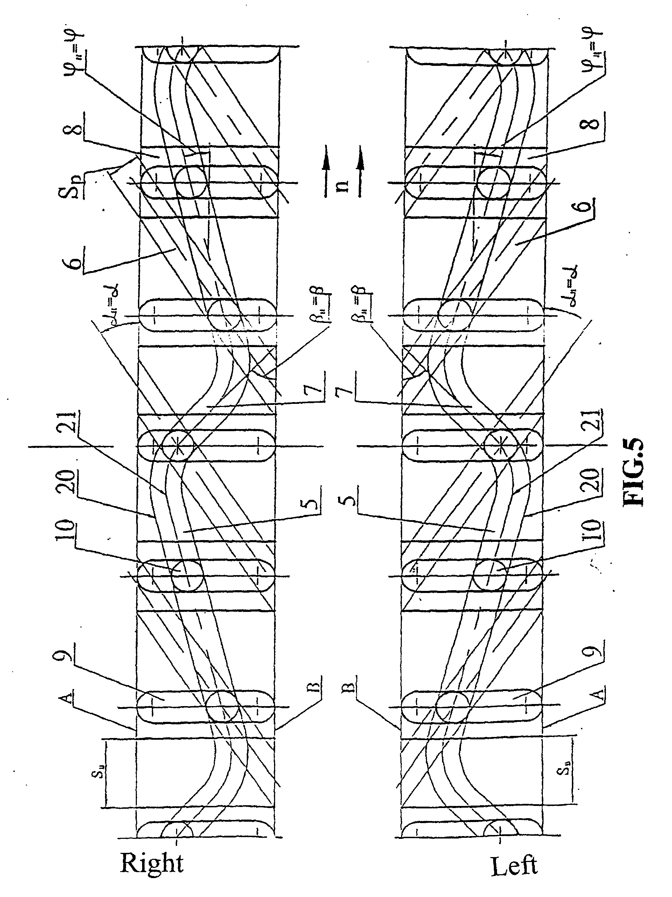

The recirculating-ball epicyclic gear train of a reduction gear unit (FIGS.4-6) for, e.g., a downhole drilling machine - a hydroturbine downhole motor or electric down hole motor is a multiple-row one and comprises a housing 1, an input shaft 14 and an output shaft 15, and a recycling-ball epicyclic gear train proper comprising an inner cage 4 having right- and left hand helical tracking grooves 5 and ball escape grooves 7, an outer cage 2 with right- and left hand helical tracking grooves 6 and ball escape grooves 8, an intermediate cage 3 having recesses 9 accommodating balls 10. The inner cage 4 may appear as sections set on the input shaft 14 by means of keys 16 fixed stationary in position against axial motion by a nut 17. The outer cage 2 may also appear as sections each of which being mounted in a sleeve 18 by means of keys 19 so as to move axially.

The sleeves 18 are in turn fixed stationary in the housingl by being frictionally compressed at their ands. The length of the sleeve 18 exceeds that of the section of the cage 2. Each of the sections of the inner cage 4 and of the outer cage 2 comprises at least one row of the right- or left-hand helical tracking grooves 5 and 6. The intermediate cage 3 which a common one for all rows of the inner cage 4 and the outer cage 2 is connected to the output shaft 15 by a spline coupling or any one of the device known generally in the engineering practice. Springy members may be interposed between the sections of the inner cage 2 or of the outer cage 4, as well as between the sleeves 18.

The helical tracking grooves 5 and 6 and the ball escape grooves 7 and 8 having conjugate portions form closed tracking grooves.

The grooves on the inner cages 4, 5 and outer cages 6, 7 are made as follows. The groove on the inner cage 4 in one row has a tracking (working) portion, i.e., the right-hand helical groove 5 and the left-hand helical ball escape groove 7, both of said grooves being mated together by a groove 20 whose axis 21 is described by a power function. The respective angles $\varphi_r$ and $\beta_r$ of helix of the helical grooves 5 and 7 differ from each other, and an even number of pairs of the grooves 5 and 7 are disposed on the length of circumference of the development onto a plane, whereby a closed circular system of tracking grooves is provided.

The system of the tracking grooves provided on the inner cage 4 of the other row is similar to that of the first row but is mirror opposed, i.e., the tracking grooves 5 are left-handed and the helical return grooves 7 are right-handed, while the mating grooves 20 are described by the same power function but of a reversed sign. Besides, the respective angles are equal in magnitude ($\varphi_r=\varphi_1=\varphi$, $\beta_r=\beta_1=\beta$).

The system of the tracking grooves of the outer cage 2 appears as right-hand helical tracking grooves 6 having helix angle $\alpha_r$ for the cage 2 of one row and left-hand helical tracking grooves 6 having helix angle $\beta_1$ for the cage 2 of the other row, as well as vertical ball escape grooves 8 parallel to the cage axis, said grooves having a width $S_e$ equal to at least 1.09 the width $S_{tr}$ of the tracking grooves 6. The helix angles of the helical tracking grooves of the cage 2 of different rows are equal in magnitude ($\alpha_r=\alpha_1=\alpha$) and an even number of pairs of the helical tracking grooves and of ball escape helical grooves are disposed on the length of circumference of the development onto a plane, whereby a closed circular system of tracking grooves is provided.

The helical grooves 6 and the escape grooves 8 are open-end ones opening onto the end faces A and B of the outer cage.

The ratio between the number ($Z_1$) of pairs of the helical tracking grooves and helical escape grooves in the inner cages, and the number ($Z_3$) of pairs of the helical tracking grooves and helical escape grooves in the outer age, or the helical angles of helical tracking grooves in the inner cages ($\varphi$) and in the outer cages ($\alpha$) determines the kinematic gear ratio i of the present sine-ball epicyclic reduction gear as follows:

$$i = (Z_1 + Z_3)/Z_1 = (tg\varphi + tg\alpha)/tg\varphi \qquad (1),$$

which is known from the general theory of such mechanisms.

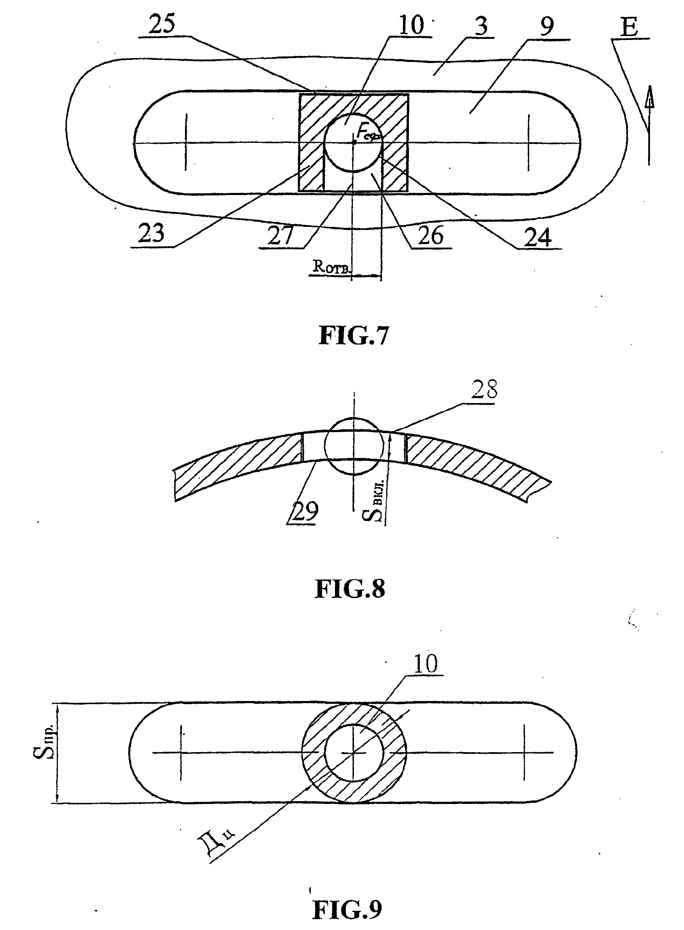

In an embodiment of the present invention as shown in FIGS.7-9 the herein-proposed gear train is equipped with inserts 23 mounted in the recesses 9 of the intermediate cage 3 movably lengthwise said recesses 9, and the balls 10 are accommodated in sockets 24 of the inserts 23. Either part of the surface of the socket 24 in the insert 23 or the entire surface thereof is spherical-shaped with a sphere radius $R_{sph}$ similar to the ball radius.

The insert 23 have a flat surface 25 contacting the face of the recess 9, said face being oriented in the direction of rotation of the 28 3. A round hole 26 is provided in the insert on its side opposite to the flat surface 25 contacting the face of the recess 9, an axis 27 of said hole 26 passes through the center $F_{sp}$ of the sphere establishing the socket 24, and the $R_h$ is similar to that of the ball 10. The axis 27 is square with the surface 25. The insert 23 appears as a solid of revolution (FIG.7) which is in fact a cylinder whose diameter $D_c$ is similar to the width $S_r$ of the recess 9 and the axis thereof passes through the center $F_{sp}$ of the sphere establishing the socket 24.

The radial dimension $S_{ins}$ of the insert 23 is not in excess of the thickness of the intermediate cage 3Surfaces 28, 29 bounding radially the insert 23 are cylinder-shaped.

Distinguishing operating features, technological and performance advantages of the recirculating-ball epicyclic gear train disclosed herein are as follows.

According to the present invention, the process of forming the tracking grooves of the outer cages which are the most labor-consuming components of the proposed gear train due to a complicated procedure of cutting said tracking grooves on an inner cylindrical surface, is substantially simplified in the course of manufacture of said gear train.

Resort made to the "cutting for a length' technique when cutting helical grooves (that is, cutting tool overtravel to the ends of the cages) simplifies and cheapens considerably the process without loss of the performance characteristics of the gear train involved.

When erecting a multiple-row version of the present gear train onto pre-assembled sections of the inner cage 4 set on the shaft 2, first the intermediate cage (carrier) 8 is installed, whereupon the balls 10 are put into the recesses 9 of the cage 8 and in the tracking grooves 5 and the escape grooves 7 in each raw successively regardless of the places of their coincidence. This done, the respective (right- and left-hand) sections of the outer cage 2 are screwed onto each of the rows. It is due to the fact that the helical tracking grooves 6 and the ball escape grooves 8 that installing the outer cages is similar to screwing-on a nut (the outer cage) onto a bolt (the shaft with the inner cages set thereon), occurring during free rotation of the retainer (the inner cage) kinematically coupled to the cages through the balls disposed in the tracking grooves thereof.

The sleeves 18 set on keys 19 on the outer cages 2, after having been secured in position in the housing 1 by virtue of, e.g., being axially clamped, lock each own outer cage 2 against rotation, and due to different axial height of the sleeve 18 and outer cage 2 the latter cage is free to axially move within the gaps between the balls and the contact surfaces of the tracking grooves, which gaps are accounted for by the production inaccuracies or machining imperfection. Hence high degree of uniformity in distributing the working loads between the rows of the cage 2 is attained due to self-aligning of the sections thereof.

The hereindisclosed recirculating-ball epicyclic gear train in its multiple-row version (used, e.g., in a heavily-loaded reduction gear of a downhole drilling motor) operates as follows.

With the input shaft 2 rotating at a peripheral velocity of $n_1$ the balls 10 disposed in the tracking grooves of the cages 4 and 2 and in the recesses 9 of the intermediate cage 3, by virtue of a preset kinematic configuration of the gear train mechanism, provides for variation in the peripheral velocity $n_2$ of the retainer and of the output shaft 3 associated therewith in accordance with the kinematic gear ratio i of the sine-ball epicyclic reduction gear train as

$$n_2 = n_1/i \qquad (2)$$

Upon applying the working moment M to the output shaft 3, a moment

$$M_2 = M/i\eta \qquad (3)$$

arises on the input shaft 2, where - gear train efficiency, and a reactive moment

$$M_3 = M_1(i\eta - 1) \qquad (4)$$

arises on the reduction gear housing 1. Accordingly, the balls 10 disposed in the helical tracking gears of the cages 4 and 2 and in the recesses 9 of the intermediate cage 3 are acted upon by normal forces $N_1$, $N_2$, $N_3$ applied by said cages and said retainer, which forces depend on the radii of application of said forces, helical angles $\varphi$ and $\alpha$ of the helical tracking grooves, the number of the gear train rows, and the number of the balls. It follows from an analysis of the loading forces acting on the gear train members that the loads at the contact of a ball with the cages are defined as follows:

$$N_1 = M/Kki\eta r_1 \sin\varphi \qquad (5)$$

$$N_2 = M/Kkr_2 \qquad (6)$$

$$N_3 = M(i\eta - 1)/(i\eta Kkr_3 \sin\alpha) \qquad (7),$$

where $r_1$, $r_2$, $r_3$ - radii of application of peripheral components of contact loads, k - number of balls disposed in the helical tracking grooves (to be found from the kinematic configuration of the mechanism), K - number of rows of the gear train.

In view of the requirement of maximum permissible contact load [N]

$$N_1 \leq [N], \ N_2 \leq [N], \ N_3 \leq [N] \qquad (8)$$

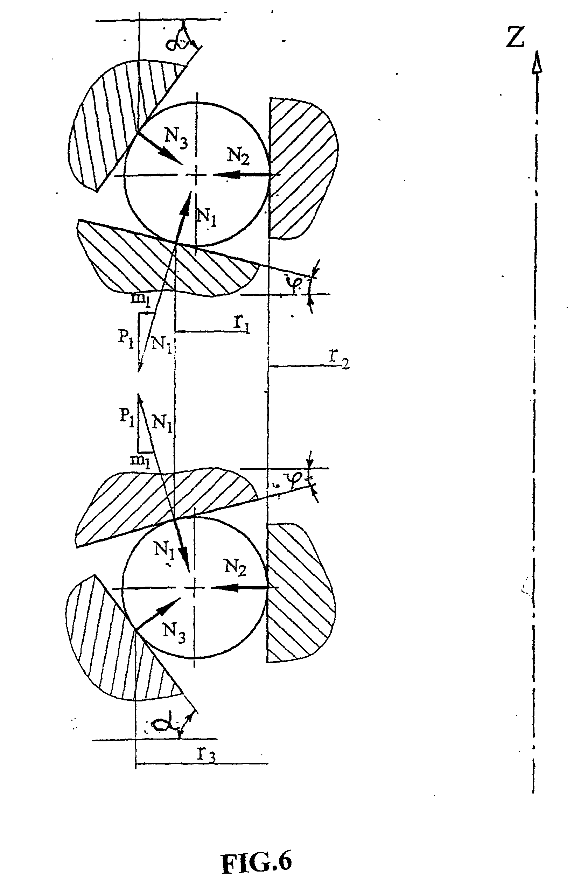

there is determined the number K of the rows which is practically in the range of K = 6÷10. The number of rows with the right- and left-handed helical tracking grooves is selected to be equal, i.e., $K_r = K_1 = K/2$ proceeding from the following consideration. The force $N_1$ applied to the inner cage is resolved into a peripheral component $m_1$ and an axial component $P_1$, of the former one determines the magnitude of the moment $M_1$ on the drive (input) shaft 2 of the reduction gear, and the latter component determines an axial thrust applied to the shaft on the part of the inner cage. As is evident from the diagram of FIG.6, the forces $P_1$ applied to the cages 4 and 6 of the right- and left-handed helical tracking grooves are directed oppositely and are equal to each other, that is, the rows are mutually balanced.

Hence in the herein-proposed recirculating-ball epicyclic gear train the input shaft and the bearings thereof experience no axial loads which, taking into account its high rotational speed in combination with the aforementioned other advantageous features thereof provide for further possibility of increasing the mechanical efficiency of the reduction gear with a multiple-row recirculating-ball epicyclic gear train and the durability thereof.

Now referring to the operation of the herein-proposed recirculating-ball epicyclic gear train (version III as shown in FIGS.7-9), with the inner cage 4 rotating the balls 10 located in the recesses 9 of the intermediate cage 3 interact over the spherical surface of the socket 24, with the insert 23 which in turn interacts with the contact surface of the recess 9. Hence the compound friction is substituted for two ones, that is, friction of the ball 10 against a sphere and friction of the insert 23 against the contact surface of the recess 9. With the insert 23 appearing as a solid of revolution (FIG.7) sliding friction of the insert 23 is substituted for its rolling friction.

The herein-proposed recirculating-ball epicyclic gear train represented in the above-stated versions is applicable in devices that involve mechanisms for rotational speed variation between coaxial shafts where the are restrictions on diametrical dimensions at high torque magnitudes, which is the case with, e.g., downhole motors used for drilling oil and gas wells, in machine-tool engineering, robotics, and some other branches of engineering and technology.

INDUSTRIAL APPLICABILITY

The invention is aimed at use in devices where some restrictions as to diametrical dimensions at high torque magnitudes, such as downhole motors used drilling oil and gas wells.

**Claims**

1. A recirculating-ball epicyclic gear train comprising three coaxial cylindrical cages (2, 3, 4) of which one cage (2) is fixed stationary and the inner cage (4) and the outer cage (2) are provided with helical tracking grooves (5, 6) and ball escape grooves oriented oppositely to the direction of the grooves (5, 6), and the intermediate cage (3) has open-end recesses (9), and balls (1) accommodated in the recesses (9) and adapted to interact with the grooves of the cages (2, 4), **CHARACTERIZED in that** the ball escape groove 7 on the inner cage 4 and between the conjugation points $0_1$ and $0_2$ on the entrance and exit areas thereof is arranged along an axis 11 passing through the center of the balls 10 and appears as two similar mirror-opposed portions of curves 12 and 13 which are described by an equation of the type $y_{1,2} = ax^n_{1,2}$ in a local coordinate system; one of said curves is associated with the coordinate system $(x_1, y_1)$ disposed on an extension of the helical tracking groove 5, while the other curve is associated with the coordinate system $(x_2, y_2)$ disposed on an extension of the helical return groove 7, while the reference points $0_1$ and $0_2$ of both coordinate systems are spaced apart from the point C of mutual intersection of the extension of the center lines of the helical tracking groove 5 and of the helical ball escape groove 7 at the entrance and exit, respectively, by the value of $L \geq D/Z_r \cos\varphi$, and the same angle of slope of tangent lines to the curves 12, 13 in local coordinates is maintained at the point T of conjugation of said curves, here $X_{1,2}$ - relative local coordinates read from their origins in fractions of the length of segment L, n - an integer exceeding 2 which is the same for both curves being conjugated, D - diameter of the center circumference of the balls 10, $\varphi$ - angle of helix of the tracking groove 5 on the inner cage 4 relative to the circumferential direction, $Z_r$ - number of recesses 9 in the intermediate cage 3.

2. A recirculating-ball epicyclic gear train as claimed in claim 1, **CHARACTERIZED in that** the ball escape groove (8) is provided on the stationary fixed cage (2) has a cross-sectional width at least $(1 + L/dZ_r)$ the width of the helical tracking groove 6, where d - diameter of the ball 10.

3. A recirculating-ball epicyclic gear train as claimed in any one of claims 1 and 2, **CHARACTERIZED in that** it has a housing (1) accommodating the outer cage (2) kept against rotation, and helical tracking grooves (6) and the ball escape grooves (8) of the outer cage (2) are open-end ones and open to the ends of the cage (2), and the ball escape grooves (8) are directed in parallel to the axis of the cage (2).

4. A recirculating-ball epicyclic gear train comprising three coaxial cylindrical cages (2, 3, 4) of which one cage (2) is fixed stationary and the inner cage (4) and the outer cage (2) are provided with helical tracking grooves (5, 6) and ball escape grooves oriented oppositely to the direction of the grooves (5, 6), and the intermediate cage (3) has open-end recesses (9), and balls (1) accommodated in the recesses (9) and adapted to interact with the grooves of the cages (5, 6), **CHARACTERIZED in that** it is a multiple-row one, each of the rows of which includes the right- or left-handed helical tracking grooves (5, 6) made on the inner cage (4) and the outer cage (2), respectively, the number of the rows having right-handed grooves being equal to that of the rows having left-handed grooves, and the width of the ball escape groove (8) on the stationary fixed cage (2) is at least 1.09 the width of the helical tracking groove (6).

5. A recirculating-ball epicyclic gear train as claimed in claim 4, **CHARACTERIZED in that** it has a housing (1) accommodating the outer cage (2) kept against rotating and provided with open-end helical tracking grooves (6) and the ball escape grooves (8) are opening to the ends of the cage (2), and the ball escape helical grooves are directed in parallel to the axis of the cage (2).

6. A recirculating-ball epicyclic gear train as claimed in claim 5, **CHARACTERIZED in that** the outer cage (2) appears as sections corresponding to the rows and provided with sleeves (18), and each section of the cage (2) is mounted in the sleeve (18) axially movably and each sleeve (18) is locked against rotation in the housing (1).

7. A recirculating-ball epicyclic gear train as claimed in claim 6, **CHARACTERIZED in that** the length of the sleeve (1) exceeds that of the section.

8. A recirculating-ball epicyclic gear train as claimed in claims 6-7, **CHARACTERIZED in that** springy members (22) are interposed between the sections and/or sleeves (18).

9. A recirculating-ball epicyclic gear train comprising three coaxial cylindrical cages (2, 3, 4) of which one cage (2) is fixed stationary and the inner cage (4) and the outer cage (2) are provided with helical tracking grooves (5, 6), and the intermediate cage (3) has open-end recesses (9), balls (10) accommodated in the recesses (9) so as to interact with the grooves (5, 6) of the cages (2, 4), **CHARACTERIZED in that** it is provided with inserts (23) mounted in the recesses (9) of the intermediate cage movably along the recesses (9) and the balls (10) are free to roll along in sockets (24) of the inserts (23).

10. A recirculating-ball epicyclic gear train as claimed in claim 9, **CHARACTERIZED in that** part or all of the surface of the socket (24) in the insert (23 are spherical in shape and the radius of the sphere is equal to the radius of the ball (10) .

11. A recirculating-ball epicyclic gear train as claimed in any one of claims 9 and 10, **CHARACTERIZED in that** the insert (23) has a flat surface (25) contacting the surface of the recess (9) oriented in the direction of rotation of the intermediate cage (3).

12. A recirculating-ball epicyclic gear train as claimed in claim 11, **CHARACTERIZED in that** a round hole 26 is provided in the insert (23) on its side opposite to the flat surface 25 contacting the face of the recess 9, and an axis 27 of said hole 26 passes through the center $F_{sp}$ of the sphere establishing the socket 24, and the radius $R_h$ is similar to that of the ball 10.

13. A recirculating-ball epicyclic gear train as claimed in any one of claims 9 and 10, **CHARACTERIZED in that** the insert (23) is shaped as a solid of revolution.

14. A recirculating-ball epicyclic gear train as claimed in claim 13, **CHARACTERIZED in that** the solid of revolution appears as a cylinder whose diameter is similar to the width of the recess (9) and the axis thereof passes through the center of the sphere establishing the socket (24).

15. A recirculating-ball epicyclic gear train as claimed in any one of claims 9-14, **CHARACTERIZED in that** the radial dimension $S_{in}$ of the insert (23) is not in excess of the thickness of the intermediate cage (3).

16. A recirculating-ball epicyclic gear train as claimed in any one of claims 9-15, **CHARACTERIZED in that** the surfaces (28, 29) bounding the insert (23) radially are cylynder-shaped.

**FIG.1**

**FIG.2**

F

FIG.3

**FIG.4**

**FIG.5**

**FIG.6**

**FIG.7**

**FIG.8**

**FIG.9**

<div align="center">

**INTERNATIONAL SEARCH REPORT**

</div>

| | |
|---|---|
| | International application No. |
| | PCT/RU 00/00366 |

| A. | CLASSIFICATION OF SUBJECT MATTER |
|---|---|
| | IPC:7  F16H 25/06 |

According to International Patent Classification (IPC) or to both national classification and IPC

| B. | FIELDS SEARCHED |
|---|---|

Minimum documentation searched (classification system followed by classification symbols)

   IPC:7  F16H 1/32,1/34,13/04,13/08,25/04,25/06,25/20,25/22

Documentation searched other than minimum documentation to the extent that such documents are included in the fields searched

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | SU  1810681 A1  (TSENTRALNY INSTITUT AVIATSIONNOGO MOTOROSTROENIYA), 23 April 1993 (23.04.93), the abstract, figure 2 | 1-8 |
| A | WO  99/31408 A1 (POLTORATSKY BORIS FEDOROVICH), 24 June 1999 (24.06.99), the abstract, figure 3 | 9-16 |
| A | US  4960003 A  (JOSEPH A.HARTLEY), 2 October 1990 (02.10.90), the abstract | 1-16 |
| A | JP  60164059 A  (KENJI MIMURA), 27 August 1985 (27.08.85), the abstract | 1-16 |

☐  Further documents are listed in the continuation of Box C.      ☐  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 26  November 2001 (26.11.01) | 06 December 2001 (06.12.01) |

| Name and mailing address of the ISA/ RU | Authorized officer |
|---|---|
| Facsimile No. | Telephone No. |

Form PCT/ISA/210 (second sheet) (July 1992)